(19) Europäisches Patentamt
European Patent Office
Office européen des brevets

(11) **EP 3 580 266 B1**

(12) **FASCICULE DE BREVET EUROPEEN**

(45) Date de publication et mention de la délivrance du brevet:
**09.08.2023 Bulletin 2023/32**

(21) Numéro de dépôt: **18707098.2**

(22) Date de dépôt: **08.02.2018**

(51) Classification Internationale des Brevets (IPC):
***C08J 9/08*** (2006.01) ***C08J 9/32*** (2006.01)

(52) Classification Coopérative des Brevets (CPC):
**C08J 9/08;** C08J 9/0066; C08J 9/122; C08J 9/141; C08J 9/143; C08J 9/147; C08J 9/32; C08J 2201/03; C08J 2203/02; C08J 2203/06; C08J 2203/10; C08J 2203/14; C08J 2203/16; C08J 2203/184; C08J 2203/22; (Cont.)

(86) Numéro de dépôt international:
**PCT/FR2018/050312**

(87) Numéro de publication internationale:
**WO 2018/146426 (16.08.2018 Gazette 2018/33)**

(54) **COMPOSITION DE MOUSSE DE COPOLYMÈRE À BLOCS POLYAMIDES ET À BLOCS POLYÉTHERS NON RÉTICULE**

UNVERNETZTER COPOLYMERSCHAUMSTOFF MIT POLYAMIDBLÖCKEN UND POLYETHERBLÖCKEN

NON-CROSSLINKED COPOLYMER FOAM WITH POLYAMIDE BLOCKS AND POLYETHER BLOCKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.02.2017 FR 1751046**

(43) Date de publication de la demande:
**18.12.2019 Bulletin 2019/51**

(73) Titulaire: **Arkema France**
**92700 Colombes (FR)**

(72) Inventeurs:
- **COCQUET, Clio**
  **27300 Bernay (FR)**
- **CHEMINET, Helena**
  **Wauwatosa, WI 53226 (US)**
- **FERNAGUT, François**
  **27120 Le Val-David (FR)**
- **DEYRAIL, Yves**
  **27470 Serquigny (FR)**
- **PINEAU, Quentin**
  **27000 Evreux (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A2- 0 405 227**
**WO-A1-2016/052387**
**JP-A- 2001 199 347**
**US-A1- 2007 026 175**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

(52) Classification Coopérative des Brevets (CPC): (Cont.)
C08J 2205/052; C08J 2367/00; C08J 2371/02; C08J 2375/04; C08J 2377/00

## Description

DOMAINE DE L'INVENTION

La présente invention concerne une mousse formée à partir d'un copolymère à blocs ainsi qu'un procédé de fabrication de celle-ci.

ARRIERE-PLAN TECHNIQUE

Diverses mousses polymères sont utilisées notamment dans le domaine des équipements sportifs, tels que des semelles ou composants de semelles, des gants, raquettes ou balles de golf, des éléments de protection individuelle en particulier pour la pratique du sport (gilets, pièces intérieure de casques, de coques...), dans le domaine de l'isolation, notamment l'isolation acoustique et/ou thermique.

De telles applications nécessitent un ensemble de propriétés physiques particulières assurant : légèreté, aptitude au rebond, faible déformation permanente en compression, aptitude à endurer des impacts répétés sans se déformer et aptitude à revenir à la forme initiale.

Les documents EP 0405227 et EP 0402883 décrivent des mousses fabriquées à partir de divers polymères et leur utilisation dans des semelles de chaussures.

Le document EP 1650255 décrit des mousses réticulées obtenues à partir de copolymères à blocs polyamides et blocs polyéthers.

Les mousses réticulées ont pour inconvénient de présenter des contraintes importantes d'un point de vue du procédé de fabrication : la durée de fabrication est généralement élevée, la fabrication est généralement nécessairement en mode discontinu (batch) uniquement, et des produits chimiques indésirables doivent être manipulés. En outre, des mousses réticulées sont difficilement recyclables après utilisation.

Le document WO 2013/148841 décrit un procédé d'extrusion bicouche à partir de divers polymères, dont les copolymères à blocs polyamides et blocs polyéthers.

Le document WO 2015/052265 décrit un procédé de fabrication de particules thermoplastiques expansées à partir d'un quelconque polymère thermoplastique élastomère.

Le document WO 2016/052387 décrit une composition de mousse non réticulée à cellules fermées de copolymère à blocs de polyamide et de polyéther.

Par ailleurs, la société Zotefoams commercialise des mousses réticulées fabriquées à partir de copolymères à blocs polyamides et blocs polyéthers, sous le nom ZOTEK®PEBA. Les inconvénients de la réticulation ont été rappelés ci-dessus. De plus, la durabilité des produits est imparfaite.

Il existe également de nombreuses mousses fabriquées à partir de polyuréthane thermoplastique (TPU) ou d'éthylène-acétate de vinyle (EVA). Ces mousses présentent une gamme de température d'utilisation relativement restreinte, ainsi qu'une déformation rémanente en compression aux temps courts qui est relativement faible, et une durabilité imparfaite. Leurs procédés de fabrication sont en outre contraignants.

Il existe donc un besoin de fournir des mousses polymères de faible densité, ayant une ou plusieurs propriétés avantageuses parmi :

- une capacité élevée à restituer de l'énergie élastique lors de sollicitations sous faible contrainte ;
- une faible déformation rémanente en compression ; et
- une résistance élevée à la fatigue en compression.

Pour obtenir ces propriétés avantageuses, la Demanderesse a développé une mousse de copolymère non réticulé, notamment une mousse de PEBA, caractérisée par :

- une densité inférieure ou égale à 800 kg/m3, de préférence inférieure ou égale à 600 kg/m3, de préférence inférieure ou égale à 500 kg/m3, de préférence inférieure ou égale à 400 kg/m3, de manière plus particulièrement préférée inférieure ou égale à 300 kg/m3, idéalement inférieure ou égale à 200 kg/m3.
- des tailles de cellules (pores de la mousse) homogènes : la différence entre leurs diamètres internes (tailles de cellule en $\mu$m) ne dépassant pas 30%, de préférence ne dépassant pas 20%, de préférence ne dépassant pas 10%,
- des tailles de cellules inférieures à celles obtenues par moussage physique par injection de gaz,
- une surface extérieure des pièces en mousse lisse.

La taille des cellules est mesurée en microscopie électronique à balayage (MEB), sur une coupe de la mousse.

Avantageusement, le D50 des cellules de mousse de l'invention est compris dans la gamme de 30 à 130 $\mu$m.

Le D50 des cellules d'une mousse correspond à la valeur de la taille de cellule qui divise la population de

cellules examinée exactement en deux. Autrement dit, dans la mousse selon l'invention où le D50 des cellules est inférieur à 130 μm, 50% des cellules ont une taille inférieure à 130 μm. Le D50 peut être mesuré selon la norme ISO 9276 - parties 1 à 6 : « Représentation de données obtenues par analyse granulométrique». Dans la présente description, on utilise un MEB « Quanta 250 » de la société FEI, et un logiciel (Fraunhofer) pour obtenir la distribution de taille de cellule de la mousse et en déduire le D50.

RESUME DE L'INVENTION

L'invention a donc pour objet une mousse de copolymère non réticulé à blocs rigides et blocs souples comprenant au moins un bloc choisi parmi les blocs polyamides, caractérisée en ce qu'elle se présente sous la forme d'une matrice polymère contenant des pores ou cellules fermées en fermant du gaz, ladite matrice comportant :

- de 90 à 99,9% en poids d'au moins un copolymère à blocs, et
- de 0,1 % à 10% en poids de carbonate de métal, de préférence de 0,1 à 5%, de préférence de 0,5 à 5%, de préférence de 0,7 à 5%, en poids de carbonate de métal, mesuré par analyse thermogravimétrique (ATG) selon la norme Norme ISO 11358 : 2011,
  sur le poids total de la composition (ou matrice) de mousse.

Avantageusement, ledit gaz comporte au moins un composé choisi parmi : $CO_2$, $H_20$, $N_2$ et leurs mélanges.
De préférence, dans la composition selon l'invention :

- les blocs rigides du copolymère ont une masse molaire moyenne en nombre de 200 à 2000 g/mol ;
- les blocs souples du copolymère ont une masse molaire moyenne en nombre de 800 à 2500 g/mol ; et
- le rapport massique des blocs polyamides par rapport aux blocs polyéthers du copolymère est de 0,1 à 2.

Avantageusement, ledit copolymère comprend un copolymère à blocs polyamide et blocs polyéther. De préférence, les blocs polyamides du copolymère sont des blocs de polyamide 11, de polyamide 12, de polyamide 6, de polyamide 6.10, de polyamide 6.12, de polyamide 10.10, de polyamide 10.12, et leurs mélanges. De préférence, les blocs polyéthers du copolymère sont des blocs de polyéthylène glycol ou de polytétraméthylène glycol.
De manière avantageuse, la composition de mousse selon l'invention présente une densité inférieure ou égale à 800 $kg/m^3$, de préférence inférieure ou égale à 700 $kg/m^3$, de préférence inférieure ou égale à 600 $kg/m^3$, de préférence inférieure ou égale à 500 $kg/m^3$, de préférence inférieure ou égale à 400 $kg/m^3$, de manière plus particulièrement préférée inférieure ou égale à 300 $kg/m^3$, voire inférieure ou égale à 200 $kg/m^3$.
Avantageusement, la composition de mousse de l'invention contient également de 0,1 à 50% en poids d'un ou plusieurs autres polymères (différent(s) du copolymère à blocs selon l'invention), de préférence choisis parmi les copolymères d'éthylène et acétate de vinyle, les copolymères d'éthylène et d'acrylate, et les copolymères d'éthylène et d'alkyl(méth)acrylate.
La présente invention a également pour objet :

- un article constitué d'une mousse de composition conforme à l'invention ; ou
- tout élément constitué d'une mousse de composition conforme à la présente invention.

La présente invention a notamment pour objet un article choisi parmi une semelle de chaussure de sport, un ballon, une balle, des gants, un équipement de protection individuel, une semelle (coussin d'amortissement) pour rail, une pièce automobile, une pièce pour poussette, une roue, une poignée, un élément de siège, une pièce de siège-auto pour enfant, une pièce de construction, une pièce d'équipement électrique et/ou électronique, une pièce d'équipement audio, d'isolation acoustique et/ou thermique, une pièce visant à amortir des chocs et/ou des vibrations, tels que ceux générés par un moyen de transport, des roues, à roulement doux comme un pneu mais sans besoin d'entretien, et tout article comprenant un mélange de ces articles.
La présente invention a encore pour objet une composition de copolymère à blocs moussable comprenant :

- (a) 90 à 99,5 %, de préférence de 95 à 99%, de préférence de 95 à 98% en poids d'un copolymère à blocs tel que défini selon l'invention ;
- (b) 1 à 10%, de préférence de 1 à 5%, de préférence de 2 à 5 %, en poids d'un agent moussant comprenant un sel de métal d'hydrogénocarbonate et au moins un composant choisi parmi :
    - un acide polycarboxylique contenant 2 a 10 atomes de carbone et au moins 2 groupes carboxyle,
    - un sel de métal dudit acide,

- un ester dudit acide polycarboxylique dans lequel au moins l'un des groupes carboxyle a été estérifie avec un alcool contenant 1 a 6 atomes de carbone,
- et leurs mélanges;

dans laquelle les pourcentages en poids sont relatifs au poids total de la composition moussable.

Avantageusement, l'agent moussant comprend un hydrogénocarbonate de métal alcalin et de l'acide citrique ou un sel de celui-ci.

Selon un mode de réalisation particulier de la présente invention, la composition de copolymère à blocs moussable comprend en outre de 0,5 à 20% en poids sur le poids total de la composition, de capsules thermoplastiques renfermant un gaz et qui s'expansent sous l'effet d'une température comprise dans la gamme de 90 à 250°C, lesdites capsules ayant une taille moyenne D50 comprise dans la gamme de 8 à 20 $\mu$m avant expansion et une taille moyenne D50 comprise dans la gamme de 30 à 130 $\mu$m après expansion dans la mousse.

De manière avantageuse, la composition de copolymère à blocs moussable selon l'invention, comprend en outre de 10 à 50% en poids d'un agent dessicant comprenant de la zéolite et/ou un oxyde de métal alcalino-terreux.

La présente invention a encore pour objet un procédé de fabrication d'une mousse selon l'invention, comprenant les étapes suivantes :

- la fourniture d'une composition moussable selon l'invention ;
- le chauffage de ladite composition à une température telle que le polymère est fondu et que l'agent moussant est décomposé, ce qui conduit à du $CO_2$, de l'$H_2O$ et/ou du $N_2$, de préférence du $CO_2$ et de l'$H_2O$, sous forme de gaz dispersé dans le polymère fondu.

Avantageusement, le procédé selon l'invention comprend en outre, notamment durant l'étape de chauffage, le mélange du copolymère à l'état fondu avec l'agent de moussage chimique, et éventuellement avec un ou des additifs.

De manière avantageuse, le procédé selon l'invention comprend une étape d'injection de la composition selon l'invention, c'est-à-dire l'injection du mélange de copolymère et d'agent de moussage chimique, dans un moule, le moussage du mélange (de la composition selon l'invention), à l'issue de son chauffage, étant réalisé(e) :

- pendant son injection dans le moule (short shot technology), et/ou
- par l'ouverture du moule (core-back technology).

Selon un mode de réalisation alternatif ou complémentaire du précédent, le procédé selon l'invention comprend l'extrusion de ladite composition moussable, induisant le moussage de ladite composition par décomposition de l'agent moussant, directement en sortie d'extrusion.

Selon encore un autre mode de réalisation, le procédé selon l'invention comprend le chauffage de ladite composition moussable dans un réacteur (procédé « batch »), dans lequel on crée éventuellement une instabilité thermodynamique en saut de pression et/ou de température, qui génère(nt) le moussage de ladite composition.

Selon un mode de réalisation particulier de l'invention, au moins 0,1% à 10%, de préférence de 0,1 à 3% en poids (sur le poids total de la composition) d'un agent d'expansion physique est ajouté lors de l'étape de mélange, ledit agent d'expansion physique étant de préférence choisi parmi le diazote, le dioxyde de carbone, les hydrocarbures, les chloroflurocarbures, les hydrochlorocarbures, les hydrofluorocarbures, les hydrochlorofluorocarbures, et leurs mélanges.

Les agents moussants physiques tels que l'azote moléculaire $N_2$, le dioxyde de carbone $CO_2$, se trouvent sous forme de gaz. Ces gaz sont solubles dans la masse fondue de copolymère sous haute pression. En dépressurisant le système, la nucléation et la croissance des bulles génèrent une structure cellulaire.

Selon encore un autre mode de réalisation, du $CO_2$, dans son état supercritique (fluide de composition intermédiaire entre les états gazeux et liquide) est utilisé en combinaison avec la composition selon l'invention. Selon un mode de réalisation préféré de l'invention, le procédé n'utilise pas de dispositif d'injection de gaz ; et peut donc être utilisé dans les dispositifs de mise en oeuvre existants déjà utilisés pour mettre en forme les copolymères à blocs, sans aucune modification nécessaire.

La présente invention permet de surmonter les inconvénients de l'état de la technique. Elle fournit plus particulièrement des mousses polymères de faible densité, ayant une ou plusieurs propriétés avantageuses parmi : une capacité élevée à restituer de l'énergie élastique lors de sollicitations sous faible contrainte ; une faible déformation rémanente en compression ; et une résistance élevée à la fatigue en compression.

De manière avantageuse, ces propriétés sont obtenues sur une large gamme de température, de préférence de -20°C à 50°C, voire de -30°C à 80°C. Cela est accompli grâce à l'utilisation d'un copolymère à blocs non réticulé, de préférence à blocs polyamides et à blocs polyéthers, caractérisé par des gammes particulières de masse molaire, notamment pour les blocs polyamides et les blocs polyéthers, ainsi qu'une gamme particulière de rapport massique entre les blocs, respectivement entre les blocs polyamides et les blocs polyéthers.

DESCRIPTION DE MODES DE REALISATION DE L'INVENTION

L'invention est maintenant décrite plus en détail et de façon non limitative dans la description qui suit.

L'invention utilise un copolymère à blocs.

Par copolymère à blocs selon l'invention, on entend les polymères thermoplastiques élastomères (TPE), qui comprennent, en alternance, des blocs ou segments dits durs ou rigides (au comportement plutôt thermoplastique) et des blocs ou segments dits souples ou flexibles (au comportement plutôt élastomère). Par exemple, les blocs polyamide sont connus pour être des segments dits rigides à température de fusion (Tf) ou température de transition vitreuse (Tg) plus élevées que la température d'utilisation du polymère, tandis que les blocs polyéther sont des segments dits souples à Tf ou Tg moins élevées que la température d'utilisation dudit polymère.

Plus précisément, un bloc est dit « souple » s'il présente une faible température de transition vitreuse (Tg). Par faible température de transition vitreuse, on entend une température de transition vitreuse Tg inférieure à 15 °C, de préférence inférieure à 0°C, avantageusement inférieure à -15°C, encore plus avantageusement à -30°C, éventuellement inférieure à -50°C.

Par blocs souples ou mous envisageables dans le copolymère selon l'invention, on entend notamment ceux choisis parmi les blocs polyéther, les blocs polyester, les blocs polysiloxane, tels que les blocs polydiméthylsiloxane ou PDMS, les blocs polyoléfine, les blocs polycarbonate, et leurs mélanges. Les blocs souples envisageables sont décrits par exemple dans la demande de brevet français n° : 0950637 page 32 ligne 3 à page 38 ligne 23. A titre d'exemple, les blocs polyéthers sont choisis parmi le poly(éthylène glycol) (PEG), le poly(1,2-propylène glycol) (PPG), le poly(1,3-propylène glycol) (PO3G), le poly(tétraméthylène glycol) (PTMG), et leurs copolymères ou mélanges.

Les blocs rigides peuvent être à base de polyamide, de polyuréthane, de polyester ou d'un mélange de ces polymères. Ces blocs sont notamment décrits dans la demande de brevet français n° : 0856752. Les blocs rigides sont de préférence à base de polyamide. Les blocs polyamide (abrégé PA) peuvent comporter des homopolyamides ou des copolyamides. Les blocs polyamide envisageables dans la composition de l'invention sont notamment ceux définis dans la demande FR0950637 de la page 27 ligne 18 à la page 31 ligne 14.

Ledit au moins un copolymère à blocs comprend au moins un bloc choisi parmi les blocs polyamides. A titre d'exemple de copolymère à blocs durs et à blocs souples, on peut citer respectivement (a) les copolymères à blocs polyester et blocs polyéther (appelés aussi COPE ou copolyétheresters), (b) les copolymères à blocs polyuréthane et blocs polyéther (appelés aussi TPU abréviation de polyuréthanes thermoplastiques) et (c) les copolymères à blocs polyamide et blocs polyéther (appelés aussi PEBA selon l'IUPAC, ou encore polyéther-bloc-amide).

De préférence, ledit au moins un copolymère comprend un copolymère à blocs polyamide et blocs polyéther (PEBA).

Les PEBA résultent de la polycondensation de blocs polyamides à extrémités réactives avec des blocs polyéthers à extrémités réactives, telle que, entre autres la polycondensation :

1) de blocs polyamides à bouts de chaîne diamines avec des blocs polyoxyalkylènes à bouts de chaînes dicarboxyliques ;
2) de blocs polyamides à bouts de chaînes dicarboxyliques avec des blocs polyoxyalkylènes à bouts de chaînes diamines, obtenues par exemple par cyanoéthylation et hydrogénation de blocs polyoxyalkylène $\alpha,\omega$- dihydroxylées aliphatiques appelés polyétherdiols ;
3) de blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone, et d'une diamine aliphatique ou aromatique, en particulier celles ayant de 2 à 20 atomes de carbone, de préférence celles ayant de 6 à 14 atomes de carbone. A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés. A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), le para-amino-di-cyclo-hexyl-méthane (PACM), l'isophoronediamine (IPDA), la 2,6-bis-(aminométhyl)-norbornane (BAMN) et

la pipérazine (Pip).

Avantageusement, des blocs polyamides PA 4.12, PA 4.14, PA 4.18, PA 6.10, PA 6.12, PA 6.14, PA 6.18, PA 9.12, PA 10.10, PA 10.12, PA 10.14 et PA 10.18 sont utilisés. Dans la notation PA X.Y, X représente le nombre d'atomes de carbone issu des résidus de diamine, et Y représente le nombre d'atomes de carbone issu des résidus de diacide, de façon conventionnelle.

Selon un deuxième type, les blocs polyamides résultent de la condensation d'un ou plusieurs acides $\alpha,\omega$-aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide $\alpha,\omega$-amino carboxylique, on peut citer les acides aminocaproïque, amino-7-heptanoïque, amino-11-undécanoïque et amino-12-dodécanoïque.

Avantageusement les blocs polyamides du deuxième type sont des blocs de PA 11 (polyundécanamide), de PA 12 (polydodécanamide) ou de PA 6 (polycaprolactame). Dans la notation PA X, X représente le nombre d'atomes de carbone issus des résidus d'aminoacide.

Selon un troisième type, les blocs polyamides résultent de la condensation d'au moins un acide $\alpha,\omega$-amino-carboxylique (ou un lactame), au moins une diamine et au moins un diacide carboxylique.

Dans ce cas, on prépare les blocs polyamide PA par polycondensation :

- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides $\alpha,\omega$-aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),
- ledit ou lesdits comonomères {Z} étant introduits dans une proportion pondérale allant avantageusement jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques.

Avantageusement, on utilise comme limiteur de chaîne le diacide carboxylique ayant Y atomes de carbone, que l'on introduit en excès par rapport à la stoechiométrie de la ou des diamines.

Selon une variante de ce troisième type, les blocs polyamides résultent de la condensation d'au moins deux acides $\alpha,\omega$-aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemples d'acide $\alpha,\omega$-aminocarboxylique aliphatique, on peut citer les acides aminocaproïques, amino-7-heptanoïque, amino-11-undécanoïque et amino-12-dodécanoïque. A titre d'exemples de lactame, on peut citer le caprolactame, l'oenantholactame et le lauryllactame. A titre d'exemples de diamines aliphatiques, on peut citer l'hexaméthylènediamine, la dodécaméthylènediamine et la triméthylhexaméthylène diamine. A titre d'exemples de diacides cycloaliphatiques, on peut citer l'acide 1,4-cyclohexyldicarboxylique. A titre d'exemples de diacides aliphatiques, on peut citer les acides butane-dioïque, adipique, azélaïque, subérique, sébacique, dodécanedicarboxylique, les acides gras dimérisés. Ces acides gras dimérisés ont de préférence une teneur en dimère d'au moins 98% ; de préférence ils sont hydrogénés ; il s'agit par exemple des produits commercialisés sous la marque "PRIPOL" par la société "CRODA", ou sous la marque EMPOL par la société BASF, ou sous la marque Radiacid par la société OLEON, et des polyoxyalkylènes $\alpha,\omega$-diacides. A titre d'exemples de diacides aromatiques, on peut citer les acides téréphtalique (T) et isophtalique (I). A titre d'exemples de diamines cycloaliphatiques, on peut citer les isomères des bis-(4-aminocyclohexyl)-méthane (BACM), bis-(3-méthyl-4- aminocyclohexyl)méthane (BMACM) et 2-2-bis-(3-méthyl-4-aminocyclohexyl)-propane(BMACP), et le para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de blocs polyamides du troisième type, on peut citer les suivants :

- le PA 6.6/6, où 6.6 désigne des motifs hexaméthylènediamine condensée avec l'acide adipique et 6 désigne des motifs résultant de la condensation du caprolactame ;
- le PA 6.6/6.10/11/12, où 6.6 désigne l'hexaméthylènediamine condensée avec l'acide adipique, 6.10 désigne l'hexaméthylènediamine condensée avec l'acide sébacique, 11 désigne des motifs résultant de la condensation de l'acide aminoundécanoïque et 12 désigne des motifs résultant de la condensation du lauryllactame.

Les notations PA X/Y, PA X/Y/Z, etc. se rapportent à des copolyamides dans lesquels X, Y, Z, etc. représentent des unités homopolyamides telles que décrites ci-dessus.

Avantageusement, les blocs polyamides du copolymère utilisé dans l'invention comprennent des blocs de polyamide PA 6, PA 11, PA 12, PA 5.4, PA 5.9, PA 5.10, PA 5.12, PA 5.13, PA 5.14, PA 5.16, PA 5.18, PA 5.36, PA

6.4, PA 6.9, PA 6.10, PA 6.12, PA 6.13, PA 6.14, PA 6.16, PA 6.18, PA 6.36, PA 10.4, PA 10.9, PA 10.10, PA 10.12, PA 10.13, PA 10.14, PA 10.16, PA 10.18, PA 10.36, PA 10.T, PA 12.4, PA 12.9, PA 12.10, PA 12.12, PA 12.13, PA 12.14, PA 12.16, PA 12.18, PA 12.36, PA 12.T, ou des mélanges ou copolymères de ceux-ci ; et de préférence comprennent des blocs de polyamide PA 6, PA 11, PA 12, PA 6.10, PA 10.10, PA 10.12, ou des mélanges ou copolymères de ceux-ci.

Les blocs polyéthers sont constitués de motifs d'oxyde d'alkylène.n Les blocs polyéthers peuvent notamment être des blocs PEG (polyéthylène glycol) c'est à dire constitués de motifs oxyde d'éthylène, et/ou des blocs PPG (propylène glycol) c'est à dire constitués de motifs oxyde de propylène, et/ou des blocs PO3G (polytriméthylène glycol) c'est-à-dire constitués de motifs polytriméthylène ether de glycol, et/ou des blocs PTMG c'est à dire constitués de motifs tetraméthylène de glycol appelés aussi polytétrahydrofurane. Les copolymères PEBA peuvent comprendre dans leur chaîne plusieurs types de polyéthers, les copolyéthers pouvant être à blocs ou statistiques.

On peut également utiliser des blocs obtenus par oxyéthylation de bisphénols, tels que par exemple le bisphénol A. Ces derniers produits sont décrits notamment dans le document EP 613919.

Les blocs polyéthers peuvent aussi être constitués d'amines primaires éthoxylées. A titre d'exemple d'amines primaires éthoxylées on peut citer les produits de formule :

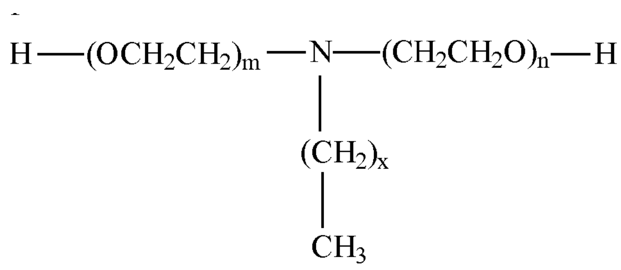

dans laquelle m et n sont des entiers compris entre 1 et 20 et x un entier compris entre 8 et 18. Ces produits sont par exemple disponibles dans le commerce sous la marque NORAMOX® de la société CECA et sous la marque GENAMIN® de la société CLARIANT.

Les blocs souples polyéthers peuvent comprendre des blocs polyoxyalkylènes à bouts de chaînes NH2, de tels blocs pouvant être obtenus par cyanoacétylation de blocs polyoxyalkylène $\alpha,\omega$-dihydroxylés aliphatiques appelées polyétherdiols. Plus particulièrement, les produits commerciaux Jeffamine ou Elastamine peuvent être utilisés (par exemple Jeffamine® D400, D2000, ED 2003, XTJ 542, produits commerciaux de la société Huntsman, également décrits dans les documents JP 2004346274, JP 2004352794 et EP 1482011).

Les blocs polyétherdiols sont soit utilisés tels quels et copolycondensés avec des blocs polyamides à extrémités carboxyliques, soit aminés pour être transformés en polyéthers diamines et condensés avec des blocs polyamides à extrémités carboxyliques. La méthode générale de préparation en deux étapes des copolymères PEBA ayant des liaisons esters entre les blocs PA et les blocs PE est connue et est décrite, par exemple, dans le document FR 2846332. La méthode générale de préparation des copolymères PEBA de l'invention ayant des liaisons amides entre les blocs PA et les blocs PE est connue et décrite, par exemple dans le document EP 1482011. Les blocs polyéthers peuvent être aussi mélangés avec des précurseurs de polyamide et un limiteur de chaîne diacide pour préparer les polymères à blocs polyamides et blocs polyéthers ayant des motifs répartis de façon statistique (procédé en une étape).

Bien entendu, la désignation PEBA dans la présente description de l'invention se rapporte aussi bien aux PEBAX® commercialisés par Arkema, aux Vestamid® commercialisés par Evonik®, aux Grilamid® commercialisés par EMS, qu'aux Pelestat® type PEBA commercialisés par Sanyo ou à tout autre PEBA d'autres fournisseurs.

Si les copolymères à blocs décrits ci-dessus comprennent généralement au moins un bloc polyamide et au moins un bloc polyéther, la présente invention couvre également tous les alliages de copolymères comprenant deux, trois, quatre (voire plus) blocs différents choisis parmi ceux décrits dans la présente description, dès lors que ces blocs comportent au moins des blocs polyamides et polyéthers.

Par exemple, le copolymère selon l'invention peut être un copolymère segmenté à blocs comprenant trois types de blocs différents (ou « tribloc »), qui résulte de la condensation de plusieurs des blocs décrits ci-dessus. Ledit tribloc est de préférence choisi parmi les copolyétheresteramides et les copolyétheramideuréthanes.

Des copolymères PEBA particulièrement préférés dans le cadre de l'invention sont : PA12-PEG, PA6-PEG, PA6/12-PEG, PA11-PEG, PA12-PTMG, PA6-PTMG, PA6/12-PTMG, PA11-PTMG, PA12-PEG/PPG, PA6-PEG/PPG, PA6/12-PEG/PPG, PA11-PEG/PPG, PA11/PO3G, PA6.10/PO3G et/ou PA10.10/PO3G.

La mousse de l'invention comporte un copolymère à blocs tel que décrit ci-dessus : de préférence un seul tel copolymère est utilisé. Il est toutefois possible d'utiliser un mélange de deux ou plus de deux copolymères à blocs, notamment plusieurs PEBA, tels que décrits ci-dessus.

Selon l'invention, la masse molaire moyenne en nombre des blocs rigides, par exemple polyamide, dans le copolymère, par exemple PEBA, est comprise dans la gamme de 200 à 2000 g/mol ; la masse molaire moyenne en nombre des blocs souples, par exemple polyéther, est comprise dans la gamme de 800 à 2500 g/mol.

La masse molaire moyenne en nombre est fixée par la teneur en limiteur de chaîne. Elle peut être calculée selon la relation :

$$Mn = (n_{monomère} / n_{limiteur}) * M_{motif\ de\ répétition} + M_{limiteur}$$

$n_{monomère}$ = nombre de moles de monomère
$n_{limiteur}$ = nombre de moles de diacide en excès
$M_{motif\ de\ répétition}$ = Masse molaire du motif de répétition
$M_{limiteur}$ = Masse molaire du diacide en excès

En outre, selon l'invention, le rapport massique des blocs rigides (par exemple polyamide dans le cas du PEBA) par rapport aux blocs souples (polyéther dans le cas du PEBA) du copolymère est de 0,1 à 2.

Ce rapport massique peut être calculé en divisant la masse molaire moyenne en nombre des blocs rigides, notamment polyamides, par la masse molaire moyenne en nombre des blocs souples, notamment polyéthers dans le cas du PEBA.

Selon des modes de réalisation particuliers, ce rapport vaut de 0,1 à 0,2 ; ou de 0,2 à 0,3 ; ou de 0,3 à 0,4 ; ou de 0,4 à 0,5 ; ou de 0,5 à 0,6 ; ou de 0,6 à 0,7 ; ou de 0,7 à 0,8 ; ou de 0,8 à 0,9; ou de 0,9 à 1; ou de 1 à 1,1 ; ou de 1,1 à 1,2 ; ou de 1,2 à 1,3 ; ou de 1,3 à 1,4; ou de 1,4 à 1,5 ; ou de 1,5 à 1,6 ; ou de 1,6 à 1,7 ; ou de 1,7 à 1,8 ; ou de 1,8 à 1,9 ; ou de 1,9 à 2.

De préférence, le copolymère utilisé dans l'invention présente une dureté instantanée inférieure ou égale à 40 Shore D, de préférence encore inférieure ou égale à 35 Shore D. Les mesures de dureté peuvent être effectuées selon la norme ISO 868:2003.

Le copolymère à blocs, notamment le copolymère à blocs polyamides et à blocs polyéthers, est utilisé pour former une mousse, sans étape de réticulation. La mousse selon l'invention est formée en mélangeant le copolymère à l'état fondu avec un agent d'expansion ou de moussage chimique, puis en réalisant une étape de moussage.

Selon un mode de réalisation, la mousse ainsi formée consiste essentiellement, voire consiste, en le copolymère décrit ci-dessus (ou les copolymères, si un mélange de copolymères est utilisé) et les produits de décomposition de l'agent d'expansion ou de moussage chimique, celui-ci se retrouvant dispersé dans la matrice, plutôt que présent dans les cellules de la mousse.

Le copolymère à blocs, notamment à blocs polyamides et à blocs polyéthers, peut être combiné à divers additifs, par exemple des copolymères d'éthylène et acétate de vinyle ou EVA (par exemple ceux commercialisés sous le nom d'Evatane® par Arkema), ou des copolymères d'éthylène et d'acrylate, ou des copolymères d'éthylène et d'alkyl(méth)acrylate, par exemple ceux commercialisés sous le nom de Lotryl® par Arkema. Ces additifs peuvent permettre d'ajuster la dureté de la pièce moussée, son aspect et son confort.

Ces additifs peuvent être ajoutés dans une teneur de 0,1 à 50 % en poids, préférentiellement de 5 à 30 % en poids, par rapport au poids total de la composition selon l'invention.

La composition selon l'invention peut comprendre en outre des additifs, tels que des agents nucléants, notamment des charges minérales, telles que le talc. De préférence, leur teneur est de 0,1 à 10% en poids, de préférence de 0,1 à 3% en poids sur le poids total de la composition selon l'invention.

L'utilisation, dans la composition selon l'invention, d'un agent moussant chimique, peut être couplée à celle d'un agent d'expansion physique. De préférence, il s'agit d'un agent physique tel que par exemple le diazote ou le dioxyde de carbone, ou un hydrocarbure, chloroflurocarbure, hydrochlorocarbure, hydrofluorocarbure ou hydrochlorofluorocarbure (saturé ou insaturé). Par exemple le butane ou le pentane peuvent être utilisés. Dans ce cas, l'agent d'expansion physique est de préférence mélangé sous forme liquide ou supercritique avec la composition de copolymère moussable puis converti en phase gazeuse lors de l'étape de moussage.

Selon un mode de réalisation préféré, la composition de copolymère moussable selon l'invention est injectée dans un moule, et le moussage de la composition est produit soit pendant son injection dans le moule, soit par l'ouverture du moule. Ces 2 techniques, chacune ou en combinaison, permettent de produire directement des objets moussés tridimensionnels aux géométries complexes.

Il s'agit également d'une technique relativement simple à mettre en oeuvre, notamment par rapport à certains procédés de fusion de particules moussées tels que décrits dans l'art antérieur : en effet, le remplissage du moule par des granulés moussés de polymère puis la fusion des particules pour assurer une tenue mécanique des pièces sans détruire la structure de la mousse sont des opérations complexes.

D'autres techniques de moussage utilisables sont notamment le moussage en « batch » et le moussage en

extrusion.

La mousse produite selon l'invention présente de préférence une densité de 50 à 800 kg/m3, et de manière plus particulièrement préférée de 100 à 600 kg/m3. Le contrôle de la densité peut être réalisé par une adaptation des paramètres du procédé de fabrication.

Avantageusement, la mousse selon l'invention présente une résilience de rebondissement, selon la norme ISO 8307:2007, supérieure ou égale à 55 %.

Avantageusement, la mousse selon l'invention présente une déformation rémanente en compression, selon la norme ISO 7214:2012, inférieure ou égale à 10 %, et de manière plus particulièrement préférée inférieure ou égale à 8 %.

De manière avantageuse, cette mousse présente également d'excellentes propriétés de tenue en fatigue et d'amortissement.

La mousse selon l'invention peut être utilisée pour fabriquer des équipements de sport, tels que des semelles de chaussures de sport, de chaussures de ski, des semelles intermédiaires, des semelles intérieures, ou encore des composants fonctionnels de semelles, sous forme d'inserts dans différentes parties de la semelle (talon ou voûte plantaire par exemple), ou encore des composants des dessus de chaussures sous forme de renforts ou d'inserts dans la structure du dessus de chaussure, sous forme de protections.

Elle peut également être utilisée pour fabriquer des ballons, des gants de sport (par exemple des gants de football), des composants de balles de golf, des raquettes, des éléments de protection (gilets, éléments intérieurs de casques, de coques...).

La mousse selon l'invention présente des propriétés anti-chocs, anti-vibrations et anti-bruit intéressantes, combinées avec des propriétés haptiques adaptées aux biens d'équipements. Elle peut donc aussi être utilisée pour la fabrication de semelles (ou coussin d'amortissement) de rails de chemin de fer, ou de diverses pièces dans l'industrie automobile, dans les transports, de pièces pour poussette, telle qu'une roue, une poignée, un élément de siège, une pièce de siège-auto pour enfant, une pièce de construction, dans les équipements électriques et électroniques, dans les équipements audio, dans les équipements pour l'isolation, notamment l'isolation acoustique et/ou thermique, dans la fabrication d'une pièce visant à amortir des chocs et/ou des vibrations, tels que ceux générés par un moyen de transport, des roues, à roulement doux comme un pneu mais sans besoin d'entretien, dans la construction ou dans l'industrie manufacturière.

Un avantage des objets en mousse selon l'invention est qu'ils peuvent être aisément recyclés, par exemple en les fondant dans une extrudeuse équipée d'une sortie de dégazage (optionnellement après les avoir découpés en morceaux).

Exemples :

Les exemples ci-dessous illustrent la présente invention sans en limiter la portée. Dans les exemples, sauf indication contraire, tous les pourcentages et parties sont exprimés en poids.

Les copolymères PEBA (Pebax® d'Arkema) utilisés dans les compositions des essais (exemples et comparatifs), ont les caractéristiques suivantes résumées dans le tableau ci-dessous :

| **PEBA N°** | **A** | **B** |
|---|---|---|
| Tf (en °C) | 144 | 159 |
| Tc (en °C) | 61 | 126 |
| Dureté instantanée (en Shore D) | 33 | 54 |
| Dureté à 15 s (en Shore D) | 25 | 50 |
| Nature des blocs PA | PA 12 | PA 12 |
| Nature des blocs PE | PTMG | PTMG |
| Ratio massique blocs PA/blocs PE | 0,4 | 2 |
| $M_n$ blocs PA (en g/mol) | 850 | 2000 |
| $M_n$ blocs PE (en g/mol) | 2000 | 1000 |

Les agents chimiques moussant utilisés dans les compositions des essais :

- ACM1 : mélange à base d'acide citrique et d'hydrogénocarbonate de sodium (NaHCO3) (produit de la gamme

Hydrocerol® de Clariant).

- ACM2 : mélange à base d'acide citrique et d'hydrogénocarbonate de sodium ($NaHCO_3$) et contenant des microsphères (produit de la gamme Hydrocerol® de Clariant).

Extrusion de plaques et essais de densité selon la norme ISO 1183, en utilisant la méthode de mesure par « Immersion » :

| Exemples | 1 | 2 |
|---|---|---|
| Composition | PEBA A + 2% ACM 2 | PEBA B + 1% ACM1 |
| Densité (kg/m3) | 650 | 800 |

Des plaques sont extrudées à partir de 2 compositions selon l'invention dans les Exemples 1 et 2. On remarque une très bonne aptitude à la transformation par extrusion pour ces deux compositions. Les plaques de mousse obtenues présentent un aspect de surface régulier, lisse et homogène, des arêtes précises et une répartition homogène des pores ou cellules dans la matrice de la mousse.

On a observé que cette homogénéité à la fois de répartition et de taille des cellules dans la mousse selon l'invention est obtenue :

- par une teneur d'au moins 1%, de préférence d'au moins 2%, en poids d'agent moussant à base de carbonate de métal, utilisée dans la composition moussable selon l'invention,
- et correspondant à une teneur de carbonate de métal restant dans la matrice de la mousse obtenue d'au moins 0,1% en poids, de préférence d'au moins 0,5% en poids, sur le poids total de la composition de mousse, mesurée par ATG selon la norme Norme ISO 11358 : 2011.

Les pièces obtenues ont une densité inférieure ou égale à 800 kg/m3.

Injection de plaques et essais de densité selon la norme ISO 1183, en utilisant la méthode de mesure par « Immersion » :

| | | %ACM | Densité (Kg/m3) |
|---|---|---|---|
| PEBA B | ACM1 | 2% Ex3 | 510 |
| | | 3% Ex4 | 450 |
| | ACM2 | 2% Ex5 | 550 |
| | | 4% Ex6 | 430 |

La mise en oeuvre d'une composition moussable selon l'invention dans les exemples 3 à 6, par un procédé de d'injection classique permet d'obtenir directement des pièces flexibles en mousse, de bonne définition et de densité inférieure à 600 kg/m3, voire inférieure à 500 kg/m3 sans aucune opération d'injection de gaz.

Dans les pièces flexibles en mousse de l'invention, les tailles de cellules (pores de la mousse) sont homogènes : la différence entre les diamètres internes des pores (ou cellules fermées) ne dépasse pas 30%.

La mousse obtenue dans les exemples 1 à 6 selon l'invention présente une résilience de rebondissement, selon la norme ISO 8307:2007, supérieure à 55 %. En outre, cette mousse présente une déformation rémanente en compression, selon la norme ISO 7214:2012, inférieure à 10 %.

La mousse obtenue selon l'invention se caractérise par sa structure contrôlée et uniforme et ses propriétés mécaniques, en particulier de tenue en fatigue et d'amortissement, compatibles avec une utilisation dans le sport, les équipements de protection individuels, l'isolation acoustique et/ou thermique, et la fabrication de pièces visant à amortir des vibrations, notamment liées aux transports.

## Revendications

1. Composition de mousse de copolymère non réticulé à blocs rigides et blocs souples comprenant au moins un bloc choisi parmi les blocs polyamides, **caractérisée en ce qu'**elle se présente sous la forme d'une matrice polymère contenant des cellules fermées enfermant du gaz, ladite matrice comportant :

   - de 90 à 99,9% en poids d'au moins un copolymère à blocs, et
   - de 0,1% à 10% en poids de carbonate de métal, mesuré par analyse thermogravimétrique (ATG) selon la norme Norme ISO 11358 : 2011,

   sur le poids total de la composition de mousse.

2. Composition selon la revendication 1, dans laquelle ledit gaz comporte au moins un composé choisi parmi : COz, $H_20$, $N_2$ et leurs mélanges.

3. Composition selon l'une quelconque des revendications précédentes, dans laquelle :

   - les blocs rigides du copolymère ont une masse molaire moyenne en nombre de 200 à 2000 g/mol ;
   - les blocs souples du copolymère ont une masse molaire moyenne en nombre de 800 à 2500 g/mol ; et
   - le rapport massique des blocs rigides par rapport aux blocs souples du copolymère est de 0,1 à 2.

4. Composition selon l'une quelconque des revendications précédentes, dans laquelle ledit au moins un copolymère comprend un copolymère à blocs polyamide et blocs polyéther.

5. Composition de mousse selon l'une quelconque des revendications précédentes, dans laquelle les blocs polyamides du copolymère sont des blocs comprenant au moins un des motifs de polyamide suivants : 11, 12, 6, 6.10, 6.12, 10.10, 10.12, et leurs mélanges.

6. Composition de mousse selon la revendication 4, dans laquelle les blocs polyéther du copolymère sont des blocs de polyéthylène glycol ou de polytétraméthylène glycol.

7. Composition de mousse selon l'une quelconque des revendications 1 à 6, qui contient également un ou plusieurs additifs choisis parmi les copolymères d'éthylène et acétate de vinyle, les copolymères d'éthylène et d'acrylate, et les copolymères d'éthylène et d'alkyl(méth)acrylate, et/ou des additifs choisis parmi les agents nucléants, notamment les charges minérales, telles que le talc.

8. Article constitué d'une mousse de composition conforme à l'une quelconque des revendications 1 à 7.

9. Article comprenant au moins un élément constitué d'une mousse de composition conforme à l'une quelconque des revendications 1 à 7.

10. Article selon l'une quelconque des revendications 8 ou 9, qui est choisi parmi une semelle de chaussure de sport, un ballon, une balle, des gants, un équipement de protection individuel, une semelle pour rail, une pièce automobile, une pièce pour poussette, une roue, une poignée, un élément de siège, une pièce de siège-auto pour enfant, une pièce de construction, une pièce d'équipement électrique et/ou électronique, une pièce d'équipement audio, d'isolation acoustique et/ou thermique, une pièce visant à amortir des chocs et/ou des vibrations, tels que ceux générés par un moyen de transport, des roues, à roulement doux comme un pneu, et tout article comprenant un mélange de ces articles.

11. Composition de copolymère à blocs moussable comprenant :

   - (a) 90 à 99 %, de préférence de 95 à 99%, de préférence de 95 à 98% en poids d'un copolymère à blocs tel que défini selon l'une quelconque des revendications 1 à 6;
   - (b) 1 à 10%, de préférence de 1 à 5%, de préférence de 2 à 5%, en poids d'un agent moussant comprenant un sel de métal d'hydrogénocarbonate et au moins un composant choisi parmi :
   - un acide polycarboxylique contenant 2 a 10 atomes de carbone et au moins 2 groupes carboxyle,
   - un sel de métal dudit acide,
   - un ester dudit acide polycarboxylique dans lequel au moins l'un des groupes carboxyle a été estérifie avec

un alcool contenant 1 a 6 atomes de carbone,
- et leurs mélanges;

dans laquelle les pourcentages en poids sont relatifs au poids total de la composition moussable.

**12.** Composition de copolymère moussable selon la revendication 11, dans laquelle l'agent moussant comprend un hydrogénocarbonate de métal alcalin et de l'acide citrique ou un sel de celui-ci.

**13.** Composition de copolymère à blocs moussable selon l'une quelconque des revendications 11 ou 12, comprenant en outre au moins un agent d'expansion physique, de préférence choisi parmi le diazote, le dioxyde de carbone, les hydrocarbures, les chloroflurocarbures, les hydrochlorocarbures, les hydrofluorocarbures, les hydrochlorofluorocarbures, et leurs mélanges.

**14.** Procédé de fabrication d'une mousse selon l'une quelconque des revendications 1 à 7, comprenant les étapes suivantes :

- la fourniture d'une composition moussable selon l'une quelconque des revendications 11 à 13 ;
- le chauffage de ladite composition à une température telle que le polymère est fondu et que l'agent moussant est décomposé, ce qui conduit à du $CO_2$, de l'$H_2O$ et/ou du $N_2$, sous forme de gaz dispersé dans le polymère fondu.

**15.** Procédé selon la revendication 14, comprenant l'injection de ladite composition moussable dans un moule, le moussage de ladite composition à l'issue de son chauffage étant réalisé :

- pendant son injection dans le moule,
et/ou
- par l'ouverture du moule.

**16.** Procédé selon la revendication 14, comprenant l'extrusion de ladite composition moussable, induisant le moussage de ladite composition par décomposition de l'agent moussant, directement en sortie d'extrusion.

**17.** Procédé selon la revendication 14, comprenant le chauffage de ladite composition moussable dans un réacteur (batch), dans lequel on crée éventuellement une instabilité thermodynamique en saut de pression et/ou de température, qui génère(nt) le moussage de ladite composition.

**18.** Procédé selon l'une quelconque des revendications 14 à 17, comprenant en outre durant l'étape de chauffage, le mélange du copolymère à l'état fondu avec l'agent de moussage chimique, et éventuellement avec un ou des additifs.

**19.** Procédé selon l'une quelconque des revendications 14 à 18, dans lequel au moins un agent d'expansion physique est en outre ajouté à la composition moussable, ledit agent d'expansion physique étant de préférence choisi parmi le diazote, le dioxyde de carbone, les hydrocarbures, les chloroflurocarbures, les hydrochlorocarbures, les hydrofluorocarbures, les hydrochlorofluorocarbures, et leurs mélanges.

**20.** Procédé selon l'une quelconque des revendications 14 à 18, **caractérisé en ce qu'**il n'utilise pas de dispositif d'injection de gaz.

## Patentansprüche

**1.** Unvernetzte Copolymer-Schaumstoffzusammensetzung mit starren Blöcken und weichen Blöcken, die mindestens einen aus Polyamid-Blöcken ausgewählten Block umfasst, **dadurch gekennzeichnet, dass** sie in Form einer Polymermatrix vorliegt, die Gas einschließende geschlossene Zellen enthält, wobei die Matrix Folgendes umfasst:

- 90 bis 99,9 Gew.-% mindestens eines Blockcopolymers und
- 0,1 Gew.-% bis 10 Gew.-% Metallcarbonat, gemessen mittels thermogravimetrischer Analyse (TGA) gemäß der Norm ISO 11358:2011, bezogen auf das Gesamtgewicht der Schaumstoffzusammensetzung.

**2.** Zusammensetzung nach Anspruch 1, wobei das Gas mindestens eine Verbindung umfasst, die ausgewählt ist aus:

$CO_2$, $H_2O$, $N_2$ und deren Mischungen.

**3.** Zusammensetzung nach einem der vorhergehenden Ansprüche, wobei:

- die starren Blöcke des Copolymers ein Zahlenmittel der Molmasse von 200 bis 2000 g/mol aufweisen;
- die weichen Blöcke des Copolymers ein Zahlenmittel der Molmasse von 800 bis 2500 g/mol aufweisen und
- das Gewichtsverhältnis von den starren Blöcken zu den weichen Blöcken des Copolymers 0,1 bis 2 beträgt.

**4.** Zusammensetzung nach einem der vorhergehenden Ansprüche, wobei das mindestens eine Copolymer ein Copolymer mit Polyamidblöcken und Polyetherblöcken umfasst.

**5.** Schaumstoffzusammensetzung nach einem der vorhergehenden Ansprüche, wobei es sich bei den Polyamidblöcken des Copolymers um Blöcke handelt, die mindestens eine der folgenden Polyamid-Repetiereinheiten umfassen: 11, 12, 6, 6.10, 6.12, 10.10, 10.12 und deren Mischungen.

**6.** Schaumstoffzusammensetzung nach Anspruch 4, wobei es sich bei den Polyetherblöcken des Copolymers um Polyethylenglycol- oder Polytetramethylenglycol-Blöcke handelt.

**7.** Schaumstoffzusammensetzung nach einem der vorhergehenden Ansprüche 1 bis 6, die darüber hinaus ein oder mehrere Additive, die aus Ethylen- und Vinylacetat-Copolymeren, Ethylen- und Acrylat-Copolymeren und Etylen- und Alkyl(meth)acrylat-Copolymeren ausgewählt sind, und/oder Additive enthält, die aus Keimbildungsmitteln, insbesondere mineralischen Füllstoffen wie Talk, ausgewählt sind.

**8.** Artikel, der aus einem Schaumstoff mit einer Zusammensetzung nach einem der Ansprüche 1 bis 7 besteht.

**9.** Artikel, der mindestens eine Komponente umfasst, die aus einem Schaumstoff mit einer Zusammensetzung nach einem der Ansprüche 1 bis 7 besteht.

**10.** Artikel nach einem der Ansprüche 8 oder 9, der ausgewählt ist aus einer Sohle für Sportschuhe, einem Ballon, einem Ball, Handschuhen, einer persönlichen Schutzausrüstung, einer Schienenunterlage, einem Automobilteil, einem Teil für Kinderwagen, ein Rad, einem Griff, einer Sitzkomponente, einer Kindersitzkomponente, einem Konstruktionsteil, einem Teil eines elektrischen und/oder elektronischen Geräts, einem Audiogeräte-, Schallisolier- und/oder Wärmeisolierteil, einem Teil zur Dämpfung von Stößen und/oder Vibrationen wie denjenigen, die von einem Verkehrsmittel erzeugt werden, Rädern mit ruhigem Laufverhalten, wie einem Reifen, und jedem Artikel, der eine Kombination dieser Artikel umfasst.

**11.** Schäumbare Blockcopolymer-Zusammensetzung, die Folgendes umfasst:

- (a) 90 bis 99 Gew.-%, vorzugsweise 95 bis 99 Gew.-%, vorzugsweise 95 bis 98 Gew.-% eines in einem der Ansprüche 1 bis 6 definierten Blockcopolymers;
- (b) 1 bis 10 Gew.-%, vorzugsweise 1 bis 5 Gew.-%, vorzugsweise 2 bis 5 Gew.-% eines Treibmittels, das ein Metallhydrogencarbonat-Salz und mindestens eine Komponente umfasst, die ausgewählt ist aus:
- einer Polycarbonsäure, die 2 bis 10 Kohlenstoffatome und mindestens 2 Carboxylgruppen enthält,
- einem Metallsalz der Säure,
- einem Ester der Polycarbonsäure, wobei mindestens eine der Carboxylgruppen mit einem 1 bis 6 Kohlenstoffatome enthaltenden Alkohol verestert wurde,
- und Mischungen davon;

wobei die Gewichtsprozente auf das Gesamtgewicht der schäumbaren Zusammensetzung bezogen sind.

**12.** Schäumbare Copolymer-Zusammensetzung nach Anspruch 11, wobei das Treibmittel ein Alkalimetallhydrogencarbonat und Citronensäure oder ein Salz davon umfasst.

**13.** Schäumbare Blockcopolymer-Zusammensetzung nach einem der Ansprüche 11 oder 12, die weiterhin mindestens ein physikalisches Treibmittel umfasst, das vorzugsweise aus Distickstoff, Kohlendioxid, Kohlenwasserstoffen, Chlorfluorkohlenstoffen, Chlorkohlenwasserstoffen, Fluorkohlenwasserstoffen, Chlorfluorkohlenwasserstoffen und Mischungen davon ausgewählt ist.

**14.** Verfahren zur Herstellung eines Schaumstoffs nach einem der Ansprüche 1 oder 7, das die folgenden Schritte umfasst:

- die Bereitstellung einer schäumbaren Zusammensetzung nach einem der Ansprüche 11 bis 13;
- das Erwärmen der Zusammensetzung auf eine solche Temperatur, dass das Polymer geschmolzen und das Treibmittel zersetzt wird, was $CO_2$, $H_2O$ und/oder $N_2$ in Form eines im geschmolzenen Polymer dispergierten Gases zur Folge hat.

**15.** Verfahren nach Anspruch 14, welches das Spritzen der schäumbaren Zusammensetzung in eine Form umfasst, wobei das Schäumen der Zusammensetzung nach seinem Erwärmen wie folgt durchgeführt wird:

- während seines Einspritzens in die Form und/oder
- durch das Öffnen der Form.

**16.** Verfahren nach Anspruch 14, welches das Extrudieren der schäumbaren Zusammensetzung, das Bewirken des Schäumens der Zusammensetzung durch das Zersetzen des Treibmittels direkt am Extrusionsauslass umfasst.

**17.** Verfahren nach Anspruch 14, welches das Erwärmen der schäumbaren Zusammensetzung in einem (diskontinuierlichen) Reaktor umfasst, wobei gegebenenfalls eine thermodynamische Instabilität bei einem Druck- und/oder Temperatursprung erzeugt wird, die das Schäumen der Zusammensetzung bewirken.

**18.** Verfahren nach einem der Ansprüche 14 bis 17, welches weiterhin während des Schritts des Erwärmens das Vermischen des Copolymers im geschmolzenen Zustand mit dem chemischen Treibmittel und gegebenenfalls mit einem Additiv oder Additiven umfasst.

**19.** Verfahren nach einem der Ansprüche 14 bis 18, wobei weiterhin mindestens ein physikalisches Treibmittel zur schäumbaren Zusammensetzung gegeben wird, wobei das physikalische Treibmittel vorzugsweise aus Distickstoff, Kohlendioxid, Kohlenwasserstoffen, Chlorfluorkohlenstoffen, Chlorkohlenwasserstoffen, Fluorkohlenwasserstoffen, Chlorfluorkohlenwasserstoffen und Mischungen davon ausgewählt ist.

**20.** Verfahren nach einem der Ansprüche 14 bis 18, **dadurch gekennzeichnet, dass** dabei keine Gaseinspritzvorrichtung verwendet wird.

## Claims

**1.** Foam composition of noncrosslinked copolymer having rigid blocks and flexible blocks comprising at least one block chosen from polyamide blocks, **characterized in that** it is provided in the form of a polymer matrix containing closed cells enclosing gas, said matrix comprising:

- from 90% to 99.9% by weight of at least one block copolymer, and
- from 0.1% to 10% by weight of metal carbonate, measured by thermogravimetric analysis (TGA) according to Standard ISO 11358:2011,

with regard to the total weight of the foam composition.

**2.** Composition according to Claim 1, in which said gas comprises at least one compound chosen from: $CO_2$, $H_2O$, $N_2$ and their mixtures.

**3.** Composition according to either one of the preceding claims, in which:

- the rigid blocks of the copolymer have a number-average molar mass of 200 to 2000 g/mol;
- the flexible blocks of the copolymer have a number-average molar mass of 800 to 2500 g/mol; and
- the ratio by weight of the rigid blocks with respect to the flexible blocks of the copolymer is from 0.1 to 2.

**4.** Composition according to any one of the preceding claims, in which said at least one copolymer comprises a copolymer having polyamide blocks and polyether blocks.

**5.** Foam composition according to any one of the preceding claims, in which the polyamide blocks of the copolymer are blocks comprising at least one of the following polyamide units: 11, 12, 6, 6.10, 6.12, 10.10, 10.12, and their mixtures.

**6.** Foam composition according to Claim 4, in which the polyether blocks of the copolymer are polyethylene glycol or polytetramethylene glycol blocks.

**7.** Foam composition according to any one of Claims 1 to 6, which also contains one or more additives chosen from ethylene and vinyl acetate copolymers, ethylene and acrylate copolymers, and ethylene and alkyl (meth)acrylate copolymers, and/or additives chosen from nucleating agents, in particular inorganic fillers, such as talc.

**8.** Article consisting of a foam with a composition in accordance with any one of Claims 1 to 7.

**9.** Article comprising at least one element consisting of a foam with a composition in accordance with any one of Claims 1 to 7.

**10.** Article according to either one of Claims 8 and 9, which is chosen from a sports footwear sole, an inflatable ball, a solid ball, gloves, personal protection equipment, a rail foot, a motor vehicle part, a pushchair part, a wheel, a handle, a seat element, a child car seat part, a construction part, an electrical and/or electronic equipment part, an audio equipment, acoustic installation and/or heat insulation part, a part targeted at dampening impacts and/or vibrations, such as those generated by means of transport, smooth-riding wheels, such as a tyre, and any article comprising a mixtures of these articles.

**11.** Foamable block copolymer composition comprising:

- (a) from 90% to 99% preferably from 95% to 99%, preferably from 95% to 98%, by weight of a block copolymer as defined according to any one of Claims 1 to 6;
- (b) from 1% to 10%, preferably from 1% to 5%, preferably from 2% to 5%, by weight of a foaming agent comprising a hydrogencarbonate metal salt and at least one component chosen from:
- a polycarboxylic acid containing from 2 to 10 carbon atoms and at least 2 carboxyl groups,
- a metal salt of said acid,
- an ester of said polycarboxylic acid in which at least one of the carboxyl groups has been esterified with an alcohol containing from 1 to 6 carbon atoms,
- and their mixtures,

in which the percentages by weight are relative to the total weight of the foamable composition.

**12.** Foamable copolymer composition according to Claim 11, in which the foaming agent comprises an alkali metal hydrogencarbonate and citric acid or a salt of the latter.

**13.** Foamable block copolymer composition according to any one of Claims 11 and 12, additionally comprising at least one physical blowing agent, preferably chosen from molecular nitrogen, carbon dioxide, hydrocarbons, chlorofluorocarbons, hydrochlorocarbons, hydrofluorocarbons, hydrochlorofluorocarbons and their mixtures.

**14.** Process for the manufacture of a foam according to any one of Claims 1 to 7, comprising the following stages:

- the provision of a foamable composition according to any one of Claims 11 to 13;
- the heating of said composition to a temperature such that the polymer is melted and that the foaming agent is decomposed, which results in $CO_2$, $H_2O$ and/or $N_2$, in the form of gas dispersed in the molten polymer.

**15.** Process according to Claim 14, comprising the injection of said foamable composition into a mould, the foaming of said composition on conclusion of its heating being carried out:

- during its injection into the mould, and/or
- by the opening of the mould.

**16.** Process according to Claim 14, comprising the extrusion of said foamable composition, bringing about the foaming of said composition by decomposition of the foaming agent, directly at the extrusion outlet.

**17.** Process according to Claim 14, comprising the heating of said foamable composition in a (batch) reactor, in which a thermodynamic instability is optionally created by a jump in pressure and/or in temperature, which generate(s) the foaming of said composition.

**18.** Process according to any one of Claims 14 to 17, additionally comprising, during the heating stage, the mixing of the copolymer in the molten state with the chemical foaming agent, and optionally with one or more additives.

**19.** Process according to any one of Claims 14 to 18, in which at least one physical blowing agent is additionally added to the foamable composition, said physical blowing agent preferably being chosen from molecular nitrogen, carbon dioxide, hydrocarbons, chlorofluorocarbons, hydrochlorocarbons, hydrofluorocarbons, hydrochlorofluorocarbons and their mixtures.

**20.** Process according to any one of Claims 14 to 18, **characterized in that** it does not use a gas injection device.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0405227 A
- EP 0402883 A
- EP 1650255 A
- WO 2013148841 A
- WO 2015052265 A
- WO 2016052387 A
- FR 0950637
- FR 0856752
- JP 2004346274 B
- JP 2004352794 B
- EP 1482011 A
- FR 2846332